# FASCICULE DE BREVET EUROPEEN

(11) **EP 3 885 231 B1**
(45) Date de publication et mention de la délivrance du brevet: **25.01.2023**
(21) Numéro de dépôt: 21163907.5
(22) Date de dépôt: 22.03.2021
(51) Int. Cl.: B61F 5/22, B60G 17/019, B60G 17/052

(54) **VÉHICULE FERROVIAIRE ET PROCÉDÉ ASSOCIÉ**
SCHIENENFAHRZEUG UND ENTSPRECHENDES VERFAHREN
RAILWAY VEHICLE AND ASSOCIATED METHOD

(30) Priorité: 23.03.2020 FR 2002792
(43) Date de publication de la demande: 29.09.2021
(73) Titulaire: ALSTOM Transport Technologies, 93400 Saint-Ouen-sur-Seine (FR)
(72) Inventeur: ESSOH, Fabrice, 93600 Aulnay sous Bois (FR); NICOLEAU, Grégoire, 75015 Paris (FR)
(74) Mandataire: Lavoix

(56) Documents cités:
- EP-A1- 2 692 608
- EP-A1- 3 053 803
- DE-A1-102016 222 663
- JP-A- 2004 182 000
- JP-A- 2006 231 968
- JP-A- 2007 131 125

## Description

La présente invention concerne un véhicule ferroviaire comprenant au moins un bogie, au moins une caisse, et au moins une suspension secondaire reliant la caisse et le bogie, la caisse et le bogie définissant un espacement variable selon une direction d'élévation du véhicule ferroviaire.

La présente invention concerne également un procédé mettant en oeuvre un tel véhicule.

La présente invention concerne notamment l'agencement de la caisse par rapport au bogie.

Le document JP 2004 182000 A décrit une méthode de contrôle de l'inclinaison d'une caisse de véhicule ferroviaire.

L'espacement entre la caisse et le bogie est typiquement variable. Par exemple, lorsque le véhicule ferroviaire transporte une charge élevée, la caisse transmet une force élevée via les suspensions secondaires au bogie et l'espacement est réduit en conséquence. Il est ainsi nécessaire de contrôler l'espacement.

Pour mesurer l'espacement, on connaît des dispositifs mécaniques comprenant un bras de mesure susceptible de se déplacer avec l'un de la caisse et le bogie. Le bras comprend une graduation permettant par exemple à un opérateur de relever l'espacement.

Lorsque l'espacement est trop faible ou trop important par rapport à une valeur de référence, l'espacement est par exemple modifié par remplissage d'air dans des coussins d'air des suspensions secondaires ou par purge d'une partie de l'air compris dans les coussins d'air.

Cependant, le contrôle de l'espacement par de tels dispositifs mécaniques n'est pas entièrement satisfaisant. En effet, un tel contrôle n'est pas toujours fiable. Par exemple, le fonctionnement des dispositifs mécaniques connus est susceptible d'être altéré par leur environnement, par exemple par le contact avec de la neige ou avec du ballast de voie.

Par ailleurs, le contrôle de l'espacement par des dispositifs mécaniques tels que décrits ci-dessus est compliqué, car un opérateur détermine l'espacement souvent manuellement.

Un but de la présente invention est ainsi d'obtenir un véhicule ferroviaire autorisant une façon plus simple de contrôler l'espacement entre la caisse et le bogie, tout en étant fiable.

A cet effet, l'invention a pour objet un véhicule ferroviaire selon la revendication 1.

Selon des modes de réalisation particuliers, le véhicule ferroviaire est selon l'une quelconque des revendications 2 à 8.

L'invention a également pour objet un procédé de contrôle selon la revendication 9.

L'invention sera mieux comprise à la lecture de la description qui va suivre, donnée uniquement à titre d'exemple et faite en se référant aux dessins annexés, sur lesquels :
la figure 1 est une vue schématique, partielle, d'un véhicule ferroviaire selon un premier mode de réalisation de l'invention, et
la figure 2 est une vue schématique, partielle, d'un véhicule ferroviaire selon un deuxième mode de réalisation de l'invention.

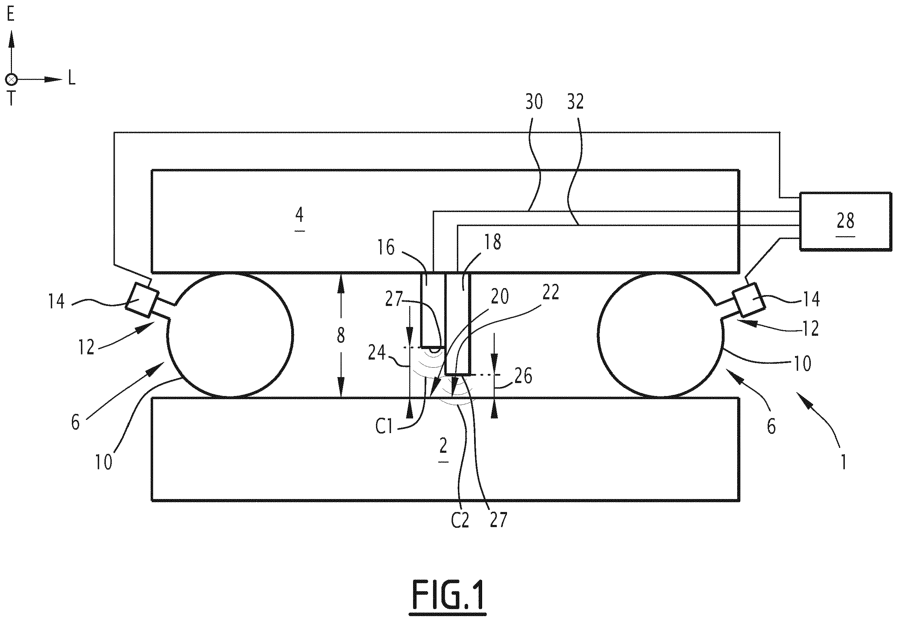

En référence à la figure 1, on décrit un véhicule ferroviaire 1 selon un premier mode de réalisation de l'invention.

Le véhicule ferroviaire 1 est par exemple un train à grande vitesse, un train suburbain, un métro ou un tramway.

Dans l'exemple de la figure 1, le véhicule ferroviaire 1 comprend un bogie 2, une caisse 4, et deux suspensions secondaires 6 reliant la caisse 4 et le bogie 2.

En variante non représentée, le véhicule ferroviaire 1 comprend plusieurs bogies et/ou plusieurs caisses.

En variante non représentée encore, le véhicule ferroviaire 1 comprend une seule suspension secondaire ou au moins trois suspensions secondaires.

Le bogie 2 est configuré pour maintenir les essieux et des roues par l'intermédiaire de suspensions primaires, non représentées. Le bogie 2 est configuré pour supporter la caisse 4 par l'intermédiaire des suspensions secondaires 6.

La caisse 4 et le bogie 2 définissent ensemble un espacement 8 variable selon une direction d'élévation E du véhicule ferroviaire 1.

La direction d'élévation E est verticale lorsque le véhicule ferroviaire 1 circule sur des rails horizontaux.

On définit également une direction longitudinale L sensiblement perpendiculaire à la direction d'élévation E et correspondant à la direction de circulation du véhicule ferroviaire 1.

On définit encore une direction transversale T sensiblement perpendiculaire à la direction d'élévation E et à la direction longitudinale L.

Chaque suspension secondaire 6 comprend par exemple un coussin d'air 10 maintenant l'espacement entre le bogie 2 et la caisse 4.

Chaque coussin d'air 10 présente par exemple une ouverture 12, munie d'un dispositif de commande d'air 14, tel qu'une électrovanne. Le dispositif de commande d'air 14 est configuré pour fournir de l'air dans le coussin d'air 10 ou laisser échapper de l'air du coussin d'air 10.

Par exemple, lorsque le coussin d'air 10 est gonflé, l'espacement 8 est augmenté. La distance entre la caisse 4 et le bogie 2 selon la direction d'élévation E est ainsi augmentée. Lorsqu'une partie de l'air compris dans le coussin d'air 10 est évacué du coussin d'air, via l'ouverture 12, l'espacement 8 est réduit.

Le véhicule ferroviaire 1 comprend un premier capteur de proximité 16 et un deuxième capteur de proximité 18.

Par exemple, chaque capteur de proximité 16, 18 est un capteur d'induction.

Par « capteur de proximité », et en particulier par « capteur d'induction », il est entendu un dispositif configuré pour générer un champ magnétique et pour détecter la présence d'une pièce métallique dans le champ magnétique, en particulier par induction. Par exemple, chaque capteur de proximité 16, 18 est configuré pour détecter une surface de la pièce métallique, telle qu'une partie du bogie 2 ou de la caisse 4.

Dans l'exemple de la figure 1, le premier capteur de proximité 16 et le deuxième capteur de proximité 18 sont fixés à la caisse 4.

Le premier capteur de proximité 16 est configuré pour détecter, par exemple par induction, la présence d'une première surface 20 lorsque l'espacement 8 est inférieur ou égal à un premier seuil. Le deuxième capteur de proximité 18 est configuré pour détecter, par exemple par induction, la présence d'une deuxième surface 22 lorsque l'espacement 8 est inférieur ou égal à un deuxième seuil distinct du premier seuil.

Le premier seuil est par exemple un seuil maximal prédéterminé de l'espacement 8 et le deuxième seuil est par exemple un seuil minimal prédéterminé de l'espacement 8. Par exemple, le seuil maximal prédéterminé est compris entre 45 mm et 55 mm et le seuil minimal prédéterminé est compris entre 25 mm et 35 mm.

Selon un autre exemple, le premier seuil est un seul minimal prédéterminé et le deuxième seuil est un seuil maximal prédéterminé de l'espacement 8.

Par exemple, la première surface 20 et la deuxième surface 22 sont des surfaces du bogie 2. Dans l'exemple représenté sur la figure 1, la première surface 20 est confondue avec la deuxième surface 22.

En variante non représentée, la première surface 20 diffère de la deuxième surface 22. Par exemple, la première surface 20 est une surface du bogie 2 et la deuxième surface 22 est une surface de la caisse 4 ou vice-versa.

En variante non représentée, au moins un des premier et deuxième capteurs 16, 18 est fixé au bogie 2. Dans ce cas, la première et/ou la deuxième surface 20, 22 sont notamment des surfaces de la caisse 4.

Dans l'exemple de la figure 1, le premier capteur de proximité 16 et le deuxième capteur de proximité 18 sont directement fixés sur la caisse 4. Par exemple, le premier capteur de proximité 16 et le deuxième capteur de proximité 18 sont agencés à l'intérieur de l'espacement 8.

En variante, au moins l'un parmi le premier capteur de proximité 16 et le deuxième capteur de proximité 18 est fixé à l'intérieur du coussin d'air 10. Ce capteur de proximité 16, 18 est par exemple relié à l'un de la caisse 4 et du bogie 2 par l'intermédiaire du coussin d'air 10. Le capteur de proximité 16, 18, selon l'exemple, est configuré pour détecter la présence d'une surface de l'autre du bogie 2 et de la caisse 4, via une partie du coussin d'air 10 couvrant cette surface.

Le premier et le deuxième capteur de proximité 16, 18 forment un ensemble de capteurs. Selon un exemple, le véhicule ferroviaire 1 comprend un ensemble de capteurs par suspension secondaire 6. Selon un autre exemple, le véhicule ferroviaire 1 comprend un ensemble de capteurs par bogie 2. Selon un autre exemple, le véhicule ferroviaire 1 comprend plusieurs ensembles de capteurs par suspension secondaire 6 et/ou par bogie 2.

Dans l'exemple de la figure 1, la première et/ou la deuxième surface 20, 22 sont sensiblement perpendiculaires à la direction d'élévation E.

Par « sensiblement perpendiculaire », il est entendu une relation de perpendicularité à plus ou moins 10 degrés, de préférence à plus ou moins 5 degrés.

Le premier capteur de proximité 16 est agencé à une première distance 24 par rapport à la première surface 20, et le deuxième capteur de proximité 18 est agencé à une deuxième distance 26 par rapport à la deuxième surface 22. La première et la deuxième distance 24, 26 sont par exemple définies selon la direction d'élévation E.

Chaque capteur de proximité 16, 18 présente par exemple une surface émettrice 27.

La première distance 24 est par exemple la distance entre la surface émettrice 27 du premier capteur de proximité 16 et la première surface 20. La deuxième distance 26 est par exemple la distance entre la surface émettrice 27 du deuxième capteur de proximité 18 et la deuxième surface 22.

Selon le premier mode de réalisation, la deuxième distance 26 est distincte de la première distance 24.

Le premier capteur de proximité 16 est par exemple configuré pour générer un champ magnétique C1 présentant une première fréquence. Le deuxième capteur de proximité 18 est par exemple configuré pour générer un champ magnétique C2 présentant une deuxième fréquence, par exemple distincte de la première fréquence. Le fait que la deuxième fréquence soit distincte de la première fréquence permet d'éviter des interférences entre le champ magnétique C1 généré par le premier capteur de proximité 16 et le champ magnétique C2 généré par le deuxième capteur de proximité 18.

En variante, la première fréquence est égale à la deuxième fréquence. Par exemple, le premier capteur de proximité 16 est configuré pour générer le champ magnétique C1 à des instants différents de la génération du champ magnétique C2 par le deuxième capteur de proximité 18. Cela permet également d'éviter des interférences.

Chaque capteur de proximité 16, 18 présente par exemple une portée de détection. Par « portée de détection », il est entendu la plage de distances dans laquelle le capteur de proximité 16, 18 est capable de détecter la première ou deuxième surface 20, 22.

Dans la direction d'élévation E, la portée de détection est par exemple comprise entre 0 cm et 50 cm, de préférence entre 0 cm et 5 cm.

Chaque capteur de proximité 16, 18 présente par exemple une portée maximale de détection. Par « portée maximale de détection », il est entendu la distance maximale à laquelle le capteur de proximité 16, 18 est capable de détecter la première ou deuxième surface 20, 22.

Par exemple, chaque capteur de proximité 16, 18 est configuré pour détecter la première ou deuxième surface 20, 22, notamment une surface métallique, par induction lorsque cette surface est présente à une distance 24, 26 par rapport au capteur de proximité 16, 18 qui est inférieure à la portée maximale de détection du capteur. Dans la direction d'élévation E, la portée maximale de détection est par exemple comprise entre 1 cm et 50 cm, de préférence entre 1 cm et 5 cm.

Par exemple, chaque capteur de proximité 16, 18 n'est pas apte à mesurer la distance entre ce capteur de proximité et la surface 20, 22, mais uniquement à détecter la présence de la surface 20, 22.

Par exemple, lorsque la surface 20, 22 est agencée à une distance supérieure à la portée maximale de détection, l'induction générée par la surface 20, 22 est inférieure à un seuil d'une induction minimale pour la détection, et la surface 20, 22 n'est ainsi pas détectée par le capteur de proximité 16, 18.

Par exemple, le premier capteur de proximité 16 présente une première portée maximale de détection selon la direction d'élévation E. Le premier capteur de proximité 16 est ainsi configuré pour détecter la présence de la première surface 20, lorsque la distance entre cette surface 20 et le premier capteur de proximité 16 est inférieure ou égale à la première portée maximale de détection.

Le deuxième capteur de proximité 18 présente par exemple une deuxième portée maximale de détection selon la direction d'élévation E. Le deuxième capteur de proximité 18 est ainsi configuré pour détecter la présence de la deuxième surface 22, lorsque la distance entre cette surface 22 et le deuxième capteur de proximité 18 est inférieure ou égale à la deuxième portée maximale de détection.

Selon le premier mode de réalisation, la première portée maximale de détection est sensiblement égale à la deuxième portée maximale de détection. Par « sensiblement égal(e) », il est entendu une relation d'égalité à plus ou moins 1 0%, de préférence à plus ou moins 5%.

Le véhicule ferroviaire 1 comprend par exemple en outre un contrôleur 28 configuré pour recevoir, par exemple par une liaison 30, au moins un premier signal de détection du premier capteur de proximité 16 et/ou pour recevoir, par exemple par une liaison 32, un deuxième signal de détection du deuxième capteur de proximité 18. Le premier signal de détection 16 comprend une information relative à la détection de la première surface 20, et le deuxième signal de détection comprend une information relative à la détection de la deuxième surface 22. Chaque liaison 30, 32 est une liaison de données, par exemple une liaison de données sans fil ou une liaison de données avec fil.

Le premier et le deuxième signal de détection sont par exemple des signaux binaires. Par exemple, lorsque le premier capteur de proximité 16 détecte la première surface 20, le premier signal de détection est égal à « 1 », sinon le premier signal de détection est égal à « 0 ». Lorsque le deuxième capteur de proximité 18 détecte la deuxième surface 22, le deuxième signal de détection est égal à « 1 », sinon le deuxième signal de détection est égal à « 0 ».

Le contrôleur 28 est en outre configuré pour envoyer un signal de commande à chaque dispositif de commande d'air 14, en fonction du premier signal de détection et du deuxième signal de détection. Chaque dispositif de commande d'air 14 est ainsi configuré pour introduire de l'air dans les coussins d'air 10 ou pour laisser échapper de l'air des coussins d'air selon le signal de commande reçu.

Par exemple, le contrôleur 28 est configuré pour déterminer que l'espacement est inférieur au premier seuil et au deuxième seuil lorsque le premier et le deuxième signaux de détection sont égaux à « 1 ». Le contrôleur 28 est ainsi configuré pour émettre le signal de commande comprenant une commande d'introduction d'air dans les coussins d'air 10, pour que chaque dispositif de commande d'air 14 introduise de l'air dans le coussin d'air 10 respectif.

Par exemple, le contrôleur 28 est configuré pour déterminer que l'espacement 8 est supérieur au premier seuil et supérieur deuxième seuil lorsque le premier et le deuxième signal de détection sont égaux à « 0 ». Le contrôleur 28 est ainsi configuré pour émettre le signal de commande comprenant une commande d'échappement d'air des coussins d'air 10 pour que chaque dispositif de commande d'air 14 laisse ainsi échapper de l'air du coussin d'air 10 respectif.

Un procédé de contrôle de l'espacement 8 va maintenant être décrit. Le procédé est mis en oeuvre par le véhicule ferroviaire 1.

Le procédé comprend une première étape de détection, une deuxième étape de détection et une étape de contrôle de l'espacement.

Lors de la première étape de détection, le premier capteur de proximité 16 détecte, par induction, la présence de la première surface 20 lorsque l'espacement 8 est inférieur ou égal au premier seuil, pour obtenir le premier signal de détection.

Lorsque le premier capteur de proximité 16 détecte la première surface 20, il envoie par exemple le signal « 1 » au contrôleur 28, et sinon le signal « 0 ».

Lors de la deuxième étape de détection, le deuxième capteur de proximité 18 détecte, par induction, la présence de la deuxième surface 22 lorsque l'espacement 8 est inférieur ou égal au deuxième seuil, distinct du premier seuil, pour obtenir le deuxième signal de détection.

Lorsque le deuxième capteur de proximité 18 détecte la deuxième surface 22, il envoie par exemple le signal « 1 » au contrôleur, et sinon le signal « 0 ».

Lors de l'étape de contrôle, le contrôleur 28 contrôle l'espacement 8 en fonction du premier signal de détection et du deuxième signal de détection.

Par exemple, le contrôleur 28 détermine que l'espacement est inférieur au premier seuil et au deuxième seuil lorsque le premier et le deuxième signal de détection sont égaux à « 1 ». Par exemple, le premier capteur de proximité 16 détecte la première surface 20 et le deuxième capteur de proximité 18 détecte la deuxième surface 22. Le contrôleur 28 émet ainsi le signal de commande comprenant une commande d'introduction d'air dans les coussins d'air 10. Chaque dispositif de commande d'air 14 introduit ainsi de l'air dans le coussin d'air 10 respectif.

Lorsque le premier et le deuxième signal de détection sont égaux à « 0 », le contrôleur 28 détermine que l'espacement 8 est supérieur au premier seuil et supérieur deuxième seuil. Par exemple, aucun des premier et deuxième capteurs de proximité 16, 18 ne détecte la surface 20, 22 respective. Le contrôleur 28 émet ainsi le signal de commande comprenant une commande d'échappement d'air des coussins d'air 10. Chaque dispositif de commande d'air 14 laisse ainsi échapper de l'air du coussin d'air 10 respectif.

Lorsque le premier signal de détection est égal à « 1 » et le deuxième signal de détection est égal à « 0 » ou vice-versa, le contrôleur 28 détermine que l'espacement 8 est inférieur ou égal au premier seuil et supérieur au deuxième seuil ou vice-versa. L'espacement 8 présente ainsi une distance entre le bogie et la caisse qui est comprise dans une plage prédéfinie pour l'opération du véhicule ferroviaire, à savoir entre le premier et le deuxième seuil. Dans ce cas, le contrôleur 28 n'émet par exemple pas le signal de commande.

Grâce aux caractéristiques décrites ci-dessus, l'espacement entre la caisse 4 et le bogie 2 est contrôlé de façon plus simple, tout en étant fiable. Le premier capteur de proximité 16 et le deuxième capteur de proximité 18 permettent en effet de déterminer l'espacement 8 par détection de la présence de la première surface 20 ou de la deuxième surface 22. Le contrôle est ainsi très simple.

En outre, le contrôle de l'espacement 8 est fiable, notamment car la détection par induction est indépendante d'impacts environnementaux, tels de salissures ou de neige sur le premier ou le deuxième capteur de proximité 16, 18.

Le premier capteur de proximité 16 et le deuxième capteur de proximité 18 permettent ensemble de déterminer si l'espacement 8 est compris entre le premier seuil et le deuxième seuil.

Le fait que la deuxième distance 26 est distincte de la première distance 24 permet par exemple d'utiliser des capteurs 16, 18 présentant un fonctionnement identique, par exemple présentant une portée maximale de détection du premier capteur de proximité 16 égale à celle du deuxième capteur de proximité 18. Cela facilite ainsi le choix et/ou le paramétrage des capteurs de proximité 16, 18.

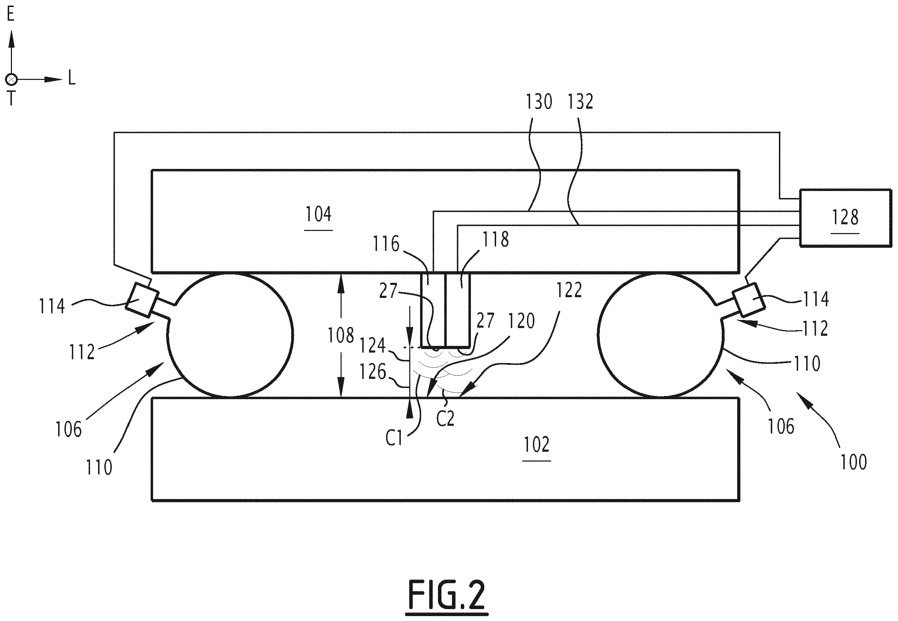

En référence à la figure 2, on va maintenant décrire un véhicule ferroviaire 100 selon un deuxième mode de réalisation de l'invention. Les éléments identiques entre le premier et le deuxième mode de réalisation ne sont pas décrits à nouveau. Seules les différences par rapport au premier mode de réalisation sont décrites en détail ci-après. Les éléments identiques ou analogues par rapport au premier mode de réalisation sont référencés par les signes de référence du premier mode de réalisation, majorées de 100.

Le premier capteur de proximité 116 est situé à une première distance 124 par rapport à la première surface 120, et le deuxième capteur de proximité 118 est situé à une deuxième distance 126 par rapport à la deuxième surface 122. La deuxième distance 126 est sensiblement égale à la première distance 124 selon le présent mode de réalisation.

Par exemple, l'installation du premier et deuxième capteur de proximité 116, 118 est facilité lorsque la première distance 124 est égale à la deuxième distance 126. Par exemple, lorsque les capteurs sont installés à la même hauteur selon la direction d'élévation E, l'installation est rapide et facile, car aucune mesure de distance par exemple de la différence de la première distance 124 par rapport à la deuxième distance 126, par exemple au vu d'une calibration, n'est requise.

La première portée maximale de détection est différente de la deuxième portée maximale de détection. Par exemple, la différence de la première par rapport à la deuxième portée maximale de détection est sensiblement égale à la différence entre le premier seuil et le deuxième seuil de l'espacement. Par exemple, la différence est comprise entre 10 mm et 30 mm.

Par exemple, la différence de la première par rapport à la deuxième portée maximale de détection selon le deuxième mode de réalisation est sensiblement égale à la différence entre la première distance 24 et la deuxième distance 26 de la figure 1.

Un procédé de contrôle de l'espacement 108 est mis en oeuvre par le véhicule ferroviaire 100. Le procédé de contrôle est identique au procédé de contrôle mis en oeuvre par le véhicule ferroviaire 1 du premier mode de réalisation. Le procédé n'est ainsi pas décrit à nouveau.

Les avantages du deuxième mode de réalisation sont les mêmes que ceux du premier mode de réalisation.

On conçoit que des caractéristiques du premier et du deuxième mode de réalisation peuvent être combinées.

Selon un exemple, la première distance 24 et la deuxième distance sont différentes l'une par rapport à l'autre. Dans cet exemple, la première portée maximale de détection est différente de la deuxième portée maximale de détection.

## Revendications

1. Véhicule ferroviaire (1, 100) comprenant au moins un bogie (2, 102), au moins une caisse (4, 104), et au moins une suspension secondaire (6, 106) reliant la caisse (4, 104) et le bogie (2, 102), la caisse (4, 104) et le bogie (2, 102) définissant un espacement (8, 108) variable selon une direction d'élévation (E) du véhicule ferroviaire (1, 100),
**caractérisé en ce que** le véhicule ferroviaire (1, 100) comprend au moins un premier capteur de proximité (16, 116) relié à l'un de la caisse (4, 104) et du bogie (2, 102), le premier capteur de proximité (16, 116) étant configuré pour détecter, notamment par induction, la présence d'une première surface (20, 120) de l'autre du bogie (2, 102) et de la caisse (4, 104) lorsque l'espacement (8, 108) est inférieur ou égal à un premier seuil, et
**en ce que** le véhicule ferroviaire (1, 100) comprend au moins un deuxième capteur de proximité (18, 118) relié à l'un de la caisse (4, 104) et du bogie (2, 102), le deuxième capteur de proximité (18, 118) étant configuré pour détecter, notamment par induction, la présence d'une deuxième surface (22, 122) de l'autre du bogie (2, 102) et de la caisse (4, 104) lorsque l'espacement (8, 108) est inférieur ou égal à un deuxième seuil, distinct du premier seuil.

2. Véhicule ferroviaire (1) selon la revendication 1, dans lequel le premier capteur de proximité (16) est agencé à une première distance (24) par rapport à la première surface (20), et le deuxième capteur de proximité (18) est agencé à une deuxième distance (26) par rapport à la deuxième surface (22), la deuxième distance (26) étant distincte de la première distance (24).

3. Véhicule ferroviaire (100) selon la revendication 1, dans lequel le premier capteur de proximité (116) est agencé à une première distance (124) par rapport à la première surface (120), et le deuxième capteur de proximité (118) est agencé à une deuxième distance (126) par rapport à la deuxième surface (122), la deuxième distance (126) étant sensiblement égale à la première distance (124).

4. Véhicule ferroviaire (1, 100) selon l'une quelconque des revendications précédentes, dans lequel le premier capteur de proximité (16, 116) présente une première portée maximale de détection selon la direction d'élévation (E) du véhicule ferroviaire (1, 100), le premier capteur de proximité (16, 116) étant configuré pour détecter la présence de la première surface (20, 120) lorsque la distance entre la première surface (20, 120) et le premier capteur de proximité (16, 116) est inférieure ou égale à la première portée maximale de détection, et
dans lequel le deuxième capteur de proximité (18, 118) présente une deuxième portée maximale de détection selon la direction d'élévation (E), le deuxième capteur de proximité (18, 118) étant configuré pour détecter la présence de la deuxième surface (22, 122) lorsque la distance entre la deuxième surface (22, 122) et le deuxième capteur de proximité (18, 118) est inférieure ou égale à la deuxième portée maximale de détection, et
dans lequel la première portée maximale de détection est différente de la deuxième portée maximale de détection.

5. Véhicule ferroviaire (1, 100) selon la revendication 1 ou 2, dans lequel le premier capteur de proximité (16, 116) présente une première portée maximale de détection selon la direction d'élévation (E) du véhicule ferroviaire (1, 100), le premier capteur de proximité (16, 116) étant configuré pour détecter la présence de la première surface (20, 120) lorsque la distance entre la première surface (20, 120) et le premier capteur de proximité (16, 116) est inférieure ou égale à la première portée maximale de détection,
dans lequel le deuxième capteur de proximité (18, 118) présente une deuxième portée maximale de détection selon la direction d'élévation (E), le deuxième capteur de proximité (18, 118) étant configuré pour détecter la présence de la deuxième surface (22, 122) lorsque la distance entre la deuxième surface (22, 122) et le deuxième capteur de proximité (18, 118) est inférieure ou égale à la deuxième portée maximale de détection, et
dans lequel la première portée maximale de détection est sensiblement égale à la deuxième portée maximale de détection.

6. Véhicule ferroviaire (1, 100) selon l'une quelconque des revendications précédentes, dans lequel le premier capteur de proximité (16, 116) est configuré pour générer un champ magnétique (C1) présentant une première fréquence et le deuxième capteur de proximité (18, 118) est configuré pour générer un champ magnétique (C2) présentant une deuxième fréquence distincte de la première fréquence.

7. Véhicule ferroviaire (1, 100) selon l'une quelconque des revendications précédentes, dans lequel la première surface (20, 120) et/ou la deuxième surface (22, 122) est perpendiculaire à la direction d'élévation (E).

8. Véhicule ferroviaire (1, 100) selon l'une quelconque des revendications précédentes, comprenant un contrôleur (28, 128) configuré pour recevoir au moins un premier signal de détection du premier capteur de proximité (16, 116) et/ou un deuxième signal de détection du deuxième capteur de proximité (18, 118), le premier signal de détection comprenant une information relative à la détection de la première surface (20, 120), et le deuxième signal de détection comprenant une information relative à la détection de la deuxième surface (22, 122).

9. Procédé de contrôle d'un espacement (8, 108) variable, le procédé étant mis en oeuvre par un véhicule ferroviaire (1, 100), le véhicule ferroviaire (1, 100) comprenant au moins un bogie (2, 102), au moins une caisse (4, 104), et au moins une suspension secondaire (6, 106) reliant la caisse (4, 104) et le bogie (2, 102), la caisse (4, 104) et le bogie (2, 102) définissant l'espacement (8, 108) selon une direction d'élévation (E) du véhicule ferroviaire (1, 100), le procédé comprenant :
- une première étape de détection, de préférence par induction, de la présence d'une première surface (20, 120) de l'un du bogie (2, 102) et de la caisse (4, 104) lorsque l'espacement (8, 108) est inférieur ou égal à un premier seuil pour obtenir un premier signal de détection ;
- une deuxième étape de détection, de préférence par induction, de la présence d'une deuxième surface (22, 122) de l'un du bogie (2, 102) et de la caisse (4, 104) lorsque l'espacement (8, 108) est inférieur ou égal à un deuxième seuil, distinct du premier seuil, pour obtenir un deuxième signal de détection ;
- une étape de contrôle de l'espacement (8, 108) en fonction du premier signal de détection et du deuxième signal de détection.

## Patentansprüche

1. Schienenfahrzeug (1, 100), umfassend mindestens ein Drehgestell (2, 102), mindestens einen Wagenkasten (4, 104) und mindestens eine sekundäre Aufhängung (6, 106), die den Wagenkasten (4, 104) und das Drehgestell (2, 102) verbindet, wobei der Wagenkasten (4, 104) und das Drehgestell (2, 102) einen Abstand (8, 108) definieren, der entlang einer Erhebungsrichtung (E) des Schienenfahrzeugs (1, 100) variabel ist,
**dadurch gekennzeichnet, dass** das Schienenfahrzeug (1, 100) mindestens einen ersten Näherungssensor (16, 116) umfasst, der mit dem Wagenkasten (4, 104) oder dem Drehgestell (2, 102) verbunden ist, wobei der erste Näherungssensor (16, 116) konfiguriert ist, um insbesondere durch Induktion die Anwesenheit einer ersten Oberfläche (20, 120) des anderen von dem Drehgestell (2, 102) und dem Wagenkasten (4, 104) zu erfassen, wenn der Abstand (8, 108) kleiner als oder gleich wie ein erster Schwellenwert ist, und
dass das Schienenfahrzeug (1, 100) mindestens einen zweiten Näherungssensor (18, 118) umfasst, der mit dem Wagenkasten (4, 104) oder dem Drehgestell (2, 102) verbunden ist, wobei der zweite Näherungssensor (18, 118) konfiguriert ist, um insbesondere durch Induktion die Anwesenheit einer zweiten Oberfläche (22, 122) des anderen von dem Drehgestell (2, 102) und dem Wagenkasten (4, 104) zu erfassen, wenn der Abstand (8, 108) kleiner als oder gleich wie ein zweiter Schwellenwert ist, der sich von dem ersten Schwellenwert unterscheidet.

2. Schienenfahrzeug (1) nach Anspruch 1, wobei der erste Näherungssensor (16) in einem ersten Abstand (24) in Bezug auf die erste Oberfläche (20) angeordnet ist, und der zweite Näherungssensor (18) in einem zweiten Abstand (26) in Bezug auf die zweite Oberfläche (22) angeordnet ist, wobei sich der zweite Abstand (26) von dem ersten Abstand (24) unterscheidet.

3. Schienenfahrzeug (100) nach Anspruch 1, wobei der erste Näherungssensor (116) in einem ersten Abstand (124) von der ersten Oberfläche (120) angeordnet ist, und der zweite Näherungssensor (118) in einem zweiten Abstand (126) von der zweiten Oberfläche (122) angeordnet ist, wobei der zweite Abstand (126) im Wesentlichen gleich wie der erste Abstand (124) ist.

4. Schienenfahrzeug (1, 100) nach einem der vorherigen Ansprüche, wobei der erste Näherungssensor (16, 116) einen ersten maximalen Erfassungsbereich entlang der Erhebungsrichtung (E) des Schienenfahrzeugs (1, 100) aufweist, wobei der erste Näherungssensor (16, 116) konfiguriert ist, um das Vorhandensein der ersten Oberfläche (20, 120) zu erfassen, wenn der Abstand zwischen der ersten Oberfläche (20, 120) und dem ersten Näherungssensor (16, 116) kleiner als oder gleich wie der erste maximale Erfassungsbereich ist, und
wobei der zweite Näherungssensor (18, 118) einen zweiten maximalen Erfassungsbereich entlang der Erhebungsrichtung (E) aufweist, wobei der zweite Näherungssensor (18, 118) konfiguriert ist, um das Vorhandensein der zweiten Oberfläche (22, 122) zu erfassen, wenn der Abstand zwischen der zweiten Oberfläche (22, 122) und dem zweiten Näherungssensor (18, 118) kleiner als oder gleich wie der zweite maximale Erfassungsbereich ist, und
wobei sich der erste maximale Erfassungsbereich von dem zweiten maximalen Erfassungsbereich unterscheidet.

5. Schienenfahrzeug (1, 100) nach Anspruch 1 oder 2, wobei der erste Näherungssensor (16, 116) einen ersten maximalen Erfassungsbereich entlang der Erhebungsrichtung (E) des Schienenfahrzeugs (1, 100) aufweist, wobei der erste Näherungssensor (16, 116) konfiguriert ist, um das Vorhandensein der ersten Oberfläche (20, 120) zu erfassen, wenn der Abstand zwischen der ersten Oberfläche (20, 120) und dem ersten Näherungssensor (16, 116) kleiner als oder gleich wie der erste maximale Erfassungsbereich ist,
wobei der zweite Näherungssensor (18, 118) einen zweiten maximalen Erfassungsbereich entlang der Erhebungsrichtung (E) aufweist, wobei der zweite Näherungssensor (18, 118) konfiguriert ist, um das Vorhandensein der zweiten Oberfläche (22, 122) zu erfassen, wenn der Abstand zwischen der zweiten Oberfläche (22, 122) und dem zweiten Näherungssensor (18, 118) kleiner als oder gleich wie der zweite maximale Erfassungsbereich ist, und
wobei der erste maximale Erfassungsbereich im Wesentlichen gleich wie der zweite maximale Erfassungsbereich ist.

6. Schienenfahrzeug (1, 100) nach einem der vorherigen Ansprüche, wobei der erste Näherungssensor (16, 116) konfiguriert ist, um ein Magnetfeld (C1) zu erzeugen, das eine erste Frequenz aufweist, und der zweite Näherungssensor (18, 118) konfiguriert ist, um ein Magnetfeld (C2) zu erzeugen, das eine zweite Frequenz aufweist, die sich von der ersten Frequenz unterscheidet.

7. Schienenfahrzeug (1, 100) nach einem der vorherigen Ansprüche, wobei die erste Oberfläche (20, 120) und/oder die zweite Oberfläche (22, 122) senkrecht zu der Erhebungsrichtung (E) ist.

8. Schienenfahrzeug (1, 100) nach einem der vorherigen Ansprüche, umfassend eine Steuerung (28, 128), die konfiguriert ist, um mindestens ein erstes Erfassungssignal vom ersten Näherungssensor (16, 116) und/oder ein zweites Erfassungssignal von dem zweiten Näherungssensor (18, 118) zu empfangen, das erste Erfassungssignal umfassend Informationen in Bezug auf die Erfassung der ersten Oberfläche (20, 120) und das zweite Erfassungssignal umfassend Informationen in Bezug auf die Erfassung der zweiten Oberfläche (22, 122).

9. Verfahren zum Steuern eines variablen Abstands (8, 108), wobei das Verfahren durch ein Schienenfahrzeug (1, 100) implementiert wird, das Schienenfahrzeug (1, 100) umfassend mindestens ein Drehgestell (2, 102), mindestens einen Wagenkasten (4, 104) und mindestens eine sekundäre Aufhängung (6, 106), die den Wagenkasten (4, 104) und das Drehgestell (2, 102) verbindet, wobei der Wagenkasten (4, 104) und das Drehgestell (2, 102) den Abstand (8, 108) in einer Erhebungsrichtung (E) des Schienenfahrzeugs (1, 100) definieren, das Verfahren umfassend:
- einen ersten Schritt zum Erfassen, vorzugsweise durch Induktion, des Vorhandenseins einer ersten Oberfläche (20, 120) von einem von dem Drehgestell (2, 102) und dem Wagenkasten (4, 104), wenn der Abstand (8, 108) kleiner als oder gleich wie ein erster Schwellenwert ist, um ein erstes Erfassungssignal zu erlangen;
- einen zweiten Schritt zum Erfassen, vorzugsweise durch Induktion, des Vorhandenseins einer zweiten Oberfläche (22, 122) von einem von dem Drehgestell (2, 102) und dem Wagenkasten (4, 104), wenn der Abstand (8, 108) kleiner als oder gleich wie ein zweiter Schwellenwert ist, der sich von dem ersten Schwellenwert unterscheidet, um ein zweites Erfassungssignal zu erlangen;
- einen Schritt zum Steuern des Abstands (8, 108) abhängig von dem ersten Erfassungssignal und dem zweiten Erfassungssignal.

## Claims

1. A railway vehicle (1, 100) comprising at least one bogie (2, 102), at least one body (4, 104), and at least one secondary suspension (6, 106) connecting the body (4, 104) and the bogie (2, 102), the body (4, 104) and the bogie (2, 102) defining a spacing (8, 108) that is variable in an elevation direction (E) of the railway vehicle (1, 100),
**characterised in that** the railway vehicle (1, 100) comprises at least one first proximity sensor (16, 116) connected to either the body (4, 104) or the bogie (2, 102), the first proximity sensor (16, 116) being configured to detect, in particular by induction, the presence of a first surface (20, 120) of the other of the bogie (2, 102) and the body (4, 104) when the spacing (8, 108) is less than or equal to a first threshold, and
**in that** the railway vehicle (1, 100) comprises at least one second proximity sensor (18, 118) connected to either the body (4, 104) or the bogie (2, 102), the second proximity sensor (18, 118) being configured to detect, in particular by induction, the presence of a second surface (22, 122) of the other of the bogie (2, 102) and the body (4, 104) when the spacing (8, 108) is less than or equal to a second threshold distinct from the first threshold.

2. The railway vehicle (1) according to claim 1, wherein the first proximity sensor (16) is arranged at a first distance (24) away from the first surface (20), and the second proximity sensor (18) is arranged at a second distance (26) away from the second surface (22), the second distance (26) being distinct from the first distance (24).

3. The railway vehicle (100) according to claim 1, wherein the first proximity sensor (116) is arranged at a first distance (124) away from the first surface (120), and the second proximity sensor (118) is arranged at a second distance (126) away from the second surface (122), the second distance (126) being substantially equal to the first distance (124).

4. The railway vehicle (1, 100) according to any of the preceding claims, wherein the first proximity sensor (16, 116) has a first maximum detection range along the elevation direction (E) of the railway vehicle (1, 100), the first proximity sensor (16, 116) being configured to detect the presence of the first surface (20, 120) when the distance between the first surface (20, 120) and the first proximity sensor (16, 116) is less than or equal to the first maximum detection range, and
wherein the second proximity sensor (18, 118) has a second maximum detection range along the elevation direction (E), the second proximity sensor (18, 118) being configured to detect the presence of the second surface (22, 122) when the distance between the second surface (22, 122) and the second proximity sensor (18, 118) is less than or equal to the second maximum detection range, and
wherein the first maximum detection range is different from the second maximum detection range.

5. The railway vehicle (1, 100) according to claim 1 or 2, wherein the first proximity sensor (16, 116) has a first maximum detection range along the elevation direction (E) of the railway vehicle (1, 100), the first proximity sensor (16, 116) being configured to detect the presence of the first surface (20, 120) when the distance between the first surface (20, 120) and the first proximity sensor (16, 116) is less than or equal to the first maximum detection range,
wherein the second proximity sensor (18, 118) has a second maximum detection range along the elevation direction (E), the second proximity sensor (18, 118) being configured to detect the presence of the second surface (22, 122) when the distance between the second surface (22, 122) and the second proximity sensor (18, 118) is less than or equal to the second maximum detection range, and
wherein the first maximum detection range is substantially equal to the second maximum detection range.

6. The railway vehicle (1, 100) according to any one of the preceding claims, wherein the first proximity sensor (16, 116) is configured to generate a magnetic field (C1) having a first frequency and the second proximity sensor (18, 118) is configured to generate a magnetic field (C2) having a second frequency distinct from the first frequency.

7. The railway vehicle (1, 100) according to any one of the preceding claims, wherein the first surface (20, 120) and/or the second surface (22, 122) is perpendicular to the elevation direction (E).

8. The railway vehicle (1, 100) according to any of the preceding claims, comprising a controller (28, 128) configured to receive at least a first detection signal from the first proximity sensor (16, 116) and/or a second detection signal from the second proximity sensor (18, 118), the first detection signal comprising an information relating to the detection of the first surface (20, 120), and the second detection signal comprising an information relating to the detection of the second surface (22, 122).

9. The method of controlling a variable spacing (8, 108), the method being implemented by a railway vehicle (1, 100), the railway vehicle (1, 100) comprising at least one bogie (2, 102), at least one body (4, 104) and at least one secondary suspension (6, 106) connecting the body (4, 104) and the bogie (2, 102), the body (4, 104) and the bogie (2, 102) defining the spacing (8, 108) along an elevation direction (E) of the railway vehicle (1, 100), the method comprising:
- a first step of detecting, preferably by induction, the presence of a first surface (20, 120) of either the bogie (2, 102) or the body (4, 104) when the spacing (8, 108) is less than or equal to a first threshold to obtain a first detection signal;
- a second step of detecting, preferably by induction, the presence of a second surface (22, 122) of either the bogie (2, 102) or the body (4, 104) when the spacing (8, 108) is less than or equal to a second threshold, distinct from the first threshold, to obtain a second detection signal;
- a step of controlling the spacing (8, 108) according to the first detection signal and the second detection signal.
